# EUROPEAN PATENT APPLICATION

(11) **EP 4 826 911 A1**
(43) Date of publication of application: **21.10.2026**
(21) Application number: 23962350.7
(22) Date of filing: 21.12.2023
(51) Int. Cl.: H01Q 19/06, H01Q 25/00, H01Q 21/00, H01Q 3/46, H01Q 13/10, H01Q 1/38, H04B 7/06

(54) **SIGNAL TRANSMISSION DEVICE INCLUDING PLURALITY OF ROTMAN LENSES**

(71) Applicant: LG Electronics Inc., Yeongdeungpo-gu Seoul 07336 (KR)
(72) Inventor: CHOI, Woocheol, Seoul 06772 (KR); CHO, Ilnam, Seoul 06772 (KR); PARK, Byeongyong, Seoul 06772 (KR)
(74) Representative: Vossius & Partner Patentanwälte Rechtsanwälte mbB
(86) International application number: PCT/KR2023/021260
(87) International publication number: WO 2025/135244

(57) **Abstract**

A signal transmission device comprises: an antenna unit having a plurality of patch antennas; a first signal line electrically connected to each of the plurality of patch antennas to operate in a first polarization; and a second signal line electrically connected to each of the plurality of patch antennas to operate in a second polarization. A signal transmission length of the second signal line may be formed to be longer than a signal transmission length of the first signal line by a quarter of a wavelength (λg).

## Description

### Technical Field

The disclosure relates to a signal transmission device for radiating multi-polarization signals. One particular embodiment relates to a signal transmission device including Rotman lenses.

### Background Art

A phased array antenna can adjust a beam-steering direction by electronically controlling the phase of radio waves at each element. In this case, the phase control of the radio waves at each element is applied in a phase shifter of a radio frequency (RF) stage. Such a phase shifter has a problem of increasing the weight, size, and cost of the phased array antenna.

In addition, polarization conversion such as vertical polarization, horizontal polarization, or circular polarization is required in the phased array antenna. In this regard, a Rotman lens is a passive beam-forming network based on the principle of an optical lens. The Rotman lens is designed such that signals along all propagation paths passing through the lens have the same amplitude and phase, and it can be used as a phase control element that transmits these signals to the array antenna for beam synthesis.

A wave front transmitted to an array port, which is a signal output port, can be modified according to the selection of a beam port, which is a signal input port of the Rotman lens. Since the wave front modification enables the phase control of the array antenna, beam-steering characteristics can be imparted to the antenna without a separate phase controller.

However, when designing the Rotman lens, the radiation performance (directivity, beam width, polarization, etc.) of the array antenna is pre-selected, and the shape of the lens corresponding thereto is determined. In this regard, an accurate definition of antenna radiation characteristics is required, and in particular, signals transmitted to the signal output ports of the Rotman lens have a sequential phase gradient. Accordingly, there is a problem that beam synthesis with two or more polarization characteristics is difficult.

### Disclosure of Invention

### Technical Problem

Therefore, to obviate those problems, an aspect of the detailed description is to provide a signal transmission device for radiating multi-polarization signals.

An aspect of the detailed description is to provide a signal transmission device for radiating multi-polarization signals in a millimeter-wave or higher frequency band.

An aspect of the detailed description is to provide a signal transmission device for radiating multi-polarization signals, enabling beam synthesis with two or more polarization characteristics.

An aspect of the detailed description is to provide beam-forming in one axial direction in a signal transmission device for radiating multi-polarization signals, enabling beam synthesis with two or more polarization characteristics.

An aspect of the detailed description is to form multi-beams in a signal transmission device for radiating multi-polarization signals, enabling beam synthesis with two or more polarization characteristics.

### Solution to problem

To achieve these and other advantages and in accordance with the purpose of the disclosure, as embodied and broadly described herein, there is provided a signal transmission device including a plurality of Rotman lenses according to an embodiment including an antenna unit having a plurality of patch antennas; a first signal line electrically connected to each of the plurality of patch antennas to cause the plurality of patch antennas to operate in a first polarization; and a second signal line electrically connected to each of the plurality of patch antennas to cause the plurality of patch antennas to operate in a second polarization. A signal transmission length of the second signal line may be formed to be larger than a signal transmission length of the first signal line by a quarter of a wavelength (λg).

According to an embodiment, the first signal line may include a first input line connected to a modem, a first output line connected to the antenna unit, and a first Rotman lens positioned between the first input line and the first output line. The second signal line may include a second input line connected to the modem, a second output line connected to the antenna unit, and a second Rotman lens positioned between the second input line and the second output line.

According to an embodiment, one side and another side of the first Rotman lens may be connected to the first input line and the first output line. One side and another side of the second Rotman lens may be connected to the second output line and the second input line. The second Rotman lens may be formed in a symmetrical structure with the first Rotman lens with respect to a vertical axis of a substrate.

According to an embodiment, the first input line may include first to fifth ports connected to one side of the first Rotman lens. The second input line may include sixth to tenth ports connected to another side of the second Rotman lens. The modem may control a signal of the first polarization to be beam-formed by changing a port, to which a signal is input, to any one of the first to fifth ports, and may control a signal of the second polarization to be beam-formed by changing the port, to which a signal is input, to any one of the sixth to tenth ports.

According to an embodiment, the modem may control ports, to which the signals are input so that any one pair of first to fifth pairs of the first port and the sixth port to the fifth port and the tenth port is selected. The modem may control a circular polarization signal to be beam-formed by changing the selected pair of ports.

According to an embodiment, the plurality of patch antennas may include first to eighth patch antennas. The first output line may include first to eighth ports configured to apply signals of the first polarization to the first to eighth patch antennas. The second output line may include ninth to sixteenth ports configured to apply signals of the second polarization to the first to eighth patch antennas.

According to an embodiment, the plurality of patch antennas may include first to eighth patch antennas arranged in a two-dimensional structure. Each of the first to eighth patch antennas may include a plurality of patch antenna elements spaced apart from each other in a first axial direction.

### Advantageous Effects of Invention

Technical effects of the signal transmission device including a plurality of Rotman lenses according to the disclosure are described as follows.

According to an embodiment, beam patterns of vertical/horizontal/circular polarization can be formed through a signal transmission device radiating multi-polarization signals.

According to an embodiment, a vertical/horizontal/circular polarization variable beam-switching solution can be proposed by implementing a Rotman lens-based signal generation network, which is capable of imparting two or more polarization characteristics to an array antenna.

According to an embodiment, it is possible to implement a signal transmission device radiating variable multi-polarization signals of vertical/horizontal/circular polarization in a millimeter-wave or higher frequency band.

According to an embodiment, an array antenna can be shared to independently/mutually supply signals to the array antenna by using a multi-Rotman lens-based multi-signal generation network capable of applying vertical or horizontal polarization signals. Accordingly, vertical/horizontal/circular polarization can be implemented by selectively applying signals according to polarization characteristics to be radiated.

According to an embodiment, selective beam-steering for vertical/horizontal/circular polarization can be allowed, and radiation performances such as beam-steering, beam-forming, and beam-broadening can be controlled.

According to an embodiment, by improving antenna radiation performance in a multi-beam generation mode using multi-Rotman lenses, multi-beam operation characteristics, which are difficult to be implemented with a beamformer such as a single Rotman lens or a Butler matrix, can be improved.

According to an embodiment, beam-forming can be provided in one axial direction by changing ports of input lines connected to the Rotman lens in a signal transmission device radiating multi-polarization signals, enabling beam synthesis with two or more polarization characteristics.

According to an embodiment, mutual interference between multi-beams can be reduced by applying signals to ports in different regions while forming multi-beams in a signal transmission device radiating multi-polarization signals, enabling beam synthesis with two or more polarization characteristics.

A further scope of applicability of the disclosure will become apparent from the following detailed description. However, since various changes and modifications within the spirit and scope of the disclosure can be clearly understood by those skilled in the art, it should be understood that specific embodiments such as the detailed description and preferred embodiments of the disclosure are given by way of example only.

### Brief Description of Drawings

FIG. 1 is a view of a structure of an array antenna module including a plurality of elements according to the disclosure.
FIG. 2 is a view of a structure implemented with a reflective reconfigurable intelligent surface (RIS) and a transmissive RIS according to the disclosure.
FIGS. 3A and 3B are views of beams formed in an optical signal path-based array antenna according to the disclosure.
FIG. 4 is a view of a signal transmission device including a plurality of Rotman lenses according to the disclosure.
FIG. 5 is an enlarged view of a first Rotman lens and a first output line of the signal transmission device of FIG. 4.
FIG. 6 is a view comparing first output lines and second output lines of the signal transmission device of FIG. 4.
FIG. 7 is an enlarged view of adjacent patch antennas of an antenna unit, a port of a first input line, and dummy ports in FIG. 4.
FIG. 8 is view of output lines of a signal transmission device formed in a linear structure or a curved structure.
FIG. 9 is a graph showing phase values for each frequency according to an inclination angle of a curve in the output lines of FIG. 8.
FIG. 10 is a graph showing beam patterns of the antenna unit of the signal transmission device of FIG. 4.
FIG. 11 is a view of a signal transmission device including a plurality of Rotman lenses and a two-dimensional array antenna structure according to the disclosure.
FIG. 12 is an enlarged view of a partial area of the two-dimensional array antenna of FIG. 11.
FIGS. 13 and 14 are graphs showing beam patterns and axial ratios when a signal is applied to a third or eighth port of first or second input lines of the signal transmission device of FIG. 11.
FIG. 15 is a graph showing beam patterns when signals are simultaneously applied to the third and eighth ports of the first and second input lines of the signal transmission device of FIG. 11.
FIG. 16 is a variety of views of gain, beam-steering angle, and beam patterns according to signal application for each port of the first input line of FIG. 11.
FIG. 17 is a variety of views of gain, beam-steering angle, and beam patterns according to signal application for each port of the second input line of FIG. 11.
FIG. 18 is a variety of views of gain, beam-steering angle, and beam patterns according to signal application for each port of the first and second input lines of FIG. 11.
FIG. 19 is a variety of views of multi-beam patterns when a signal is applied to one port of the first input line and one port of the second input line.
FIG. 20 is a variety of views of beam patterns when M ports are selected for one of the first and second input lines and N ports are selected for the other.

### Mode for Invention

Hereinafter, an antenna module having a phase delay will be described in relation to a signal transmission device radiating multi-polarization signals according to the disclosure.

In this regard, an antenna module including a plurality of elements according to the disclosure may be referred to as a phase delay array antenna module. The antenna module may be configured to include a plurality of radiators and a phase delay element capable of implementing phase delay. The phase delay element may be implemented with a feeding structure of a specific structure without a separate electronic component such as a phase shifter.

The array antenna module may be configured to support a 6G wireless communication service. In this regard, the array antenna module may be configured to operate in a millimeter-wave band or in a 10 GHz band. The array antenna module may be applied to a mobile communication antenna, a vehicle antenna, or a satellite communication antenna.

The 6G wireless communication service is not limited to electronic devices such as mobile terminals or image display devices. The 6G wireless communication service may be applied to electronic devices supporting fully autonomous vehicles, artificial intelligence (AI) robots, and augmented reality/virtual reality (AR/VR)-based metaverses.

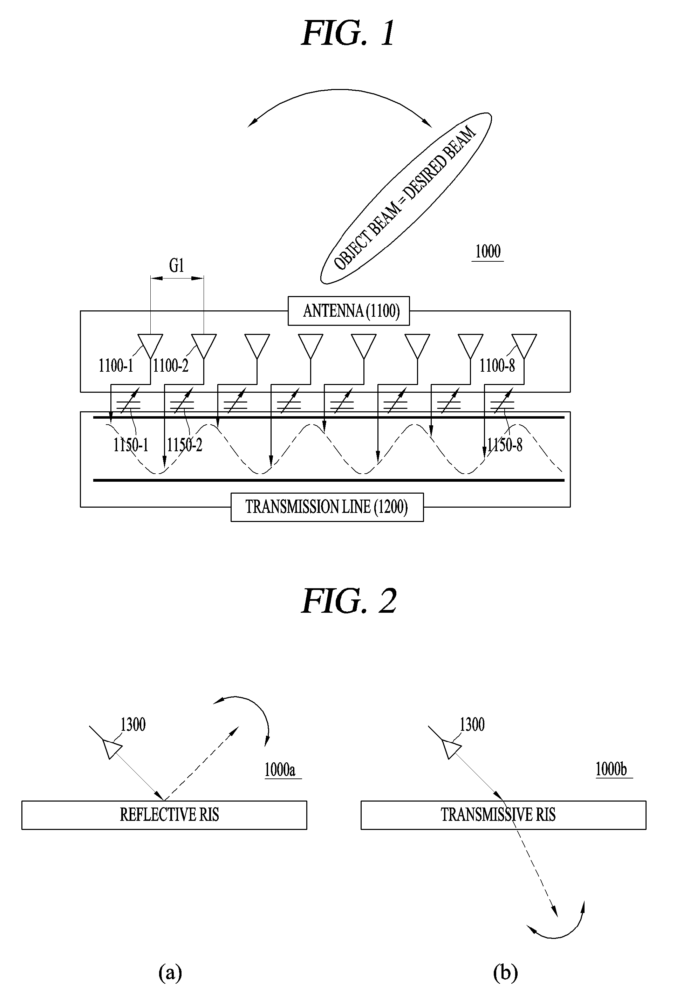

FIG. 1 shows a structure of an array antenna module including a plurality of elements according to the disclosure. Referring to FIG. 1, the array antenna module 1000 may be configured as an array antenna 1100 including a plurality of elements 1100-1 to 1100-8. The plurality of elements are not limited to eight in number and may vary depending on applications.

The antenna module 1000 may be configured as a one-dimensional array antenna in which a plurality of elements are arranged in one axial direction. As another example, the antenna module 1000 may be configured as a two-dimensional array antenna in which a plurality of elements are arranged in one axial direction and another axial direction perpendicular to the one axial direction.

A spacing G1 between the plurality of elements 1100-1 to 1100-8 may be implemented as a value associated with a wavelength corresponding to an operating frequency. The plurality of elements 1100-1 to 1100-8 may be operably coupled to phase delay elements 1150-1 to 1150-8, respectively. The phase delay elements 1150-1 to 1150-8 may be formed as a feeding structure having a phase delay. The phase delay elements 1150-1 to 1150-8 may be formed as a feeding structure that connects adjacent antenna elements.

A transmission line 1200 connected to the plurality of elements 1100-1 to 1100-8 may be implemented as a waveguide, a microstrip line, a strip line, or a substrate integrated waveguide (SIW). The plurality of elements 1100-1 to 1100-8 may be controlled to be independently turned on/off. The plurality of elements 1100-1 to 1100-8 may be controlled to be independently turned on/off to adjust a beam-forming direction of the antenna module 1000.

As the plurality of elements 1100-1 to 1100-8 are independently turned on/off, the phase of a signal applied to the plurality of elements 1100-1 to 1100-8 may vary as shown in the transmission line 1200 of FIG. 1. As an on/off interval of the plurality of elements 1100-1 to 1100-8 decreases, a phase difference between adjacent elements increases. Accordingly, as the on/off interval of the plurality of elements 1100-1 to 1100-8 decreases, a beam-forming angle increases.

Meanwhile, the antenna module including the plurality of antenna elements according to the disclosure may adjust a phase by combining with a reconfigurable intelligent surface (RIS). In this regard, FIG. 2 shows a structure implemented with a reflective RIS and a transmissive RIS according to the disclosure.

Referring to (a) of FIG. 2, the antenna module 1000 may be configured to include a reflective RIS 1000a and at least one external antenna 1300. A radio signal radiated from the external antenna 1300 may be configured to be reflected by the reflective RIS 1000a. A beam-forming angle of the radio signal may vary by independently varying on/off states of respective elements constituting the reflective RIS 1000a.

Referring to (b) of FIG. 2, the antenna module 1000 may be configured to include a transmissive RIS 1000b and at least one external antenna 1300. A radio signal radiated from the external antenna 1300 may be configured to pass through the transmissive RIS 1000b. A beam-forming angle of the radio signal may vary by independently varying on/off states of respective elements constituting the transmissive RIS 1000b.

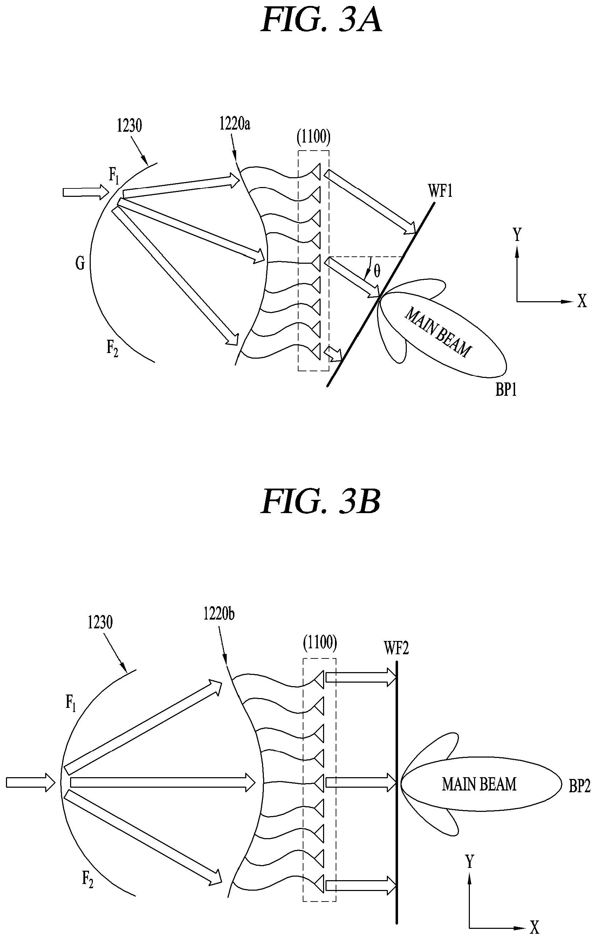

Hereinafter, a signal transmission device including a plurality of Rotman lenses according to the disclosure will be described. Specifically, FIGS. 3A and 3B show beams formed in an optical signal path-based array antenna according to the disclosure.

Referring to FIG. 3A, a signal may be transmitted through a body region of a Rotman lens 1230 from a curved structure of the Rotman lens 1230 to one end 1220a of an output line. When a signal is applied through a first focal point F1 of the Rotman lens 1230, an in-phase wave front WF1 is formed to be inclined by a specific angle θ in a Y-axis direction. Accordingly, a steering angle of a beam pattern BP1 of a signal radiated through the antenna unit 1100 can be steered to the specific angle θ.

Referring to FIG. 3B, a signal may be transmitted through the body region of the Rotman lens 1230 from the curved structure of the Rotman lens 1230 to one end 1220b of the output line. When a signal is applied through a center point between the first focal point F1 and a second focal point F2 of the Rotman lens 1230, an in-phase wave front WF2 is formed in the Y-axis direction. Accordingly, a steering angle of a beam pattern BP2 of a signal radiated through the antenna unit 1100 can be steered to an angle of 0 degrees.

Referring to FIGS. 3A and 3B, as a passive beam-forming network based on ray optics, a phase control element may be used to synthesize a beam by ensuring that all propagation paths distributed through the lens form an in-phase plane. The phase control element may be designed to supply signals having uniform amplitude and a specific phase to antenna elements by propagating the signals through a Rotman lens. Since phase control of the signals applied to the antenna elements can be achieved by selecting a specific signal input port, beam-steering characteristics can be imparted to the antenna without a separate phase controller.

Beam ports may be formed at a front end of the Rotman lens 1230 as signal input unit. The body region of the Rotman lens 1230 constitutes a lens body as a signal distribution unit. A signal output unit is formed from one end 1220a, 1220b of the output line to the antenna unit 1100. The one end 1220a, 1220b of the output line may be defined as the array port.

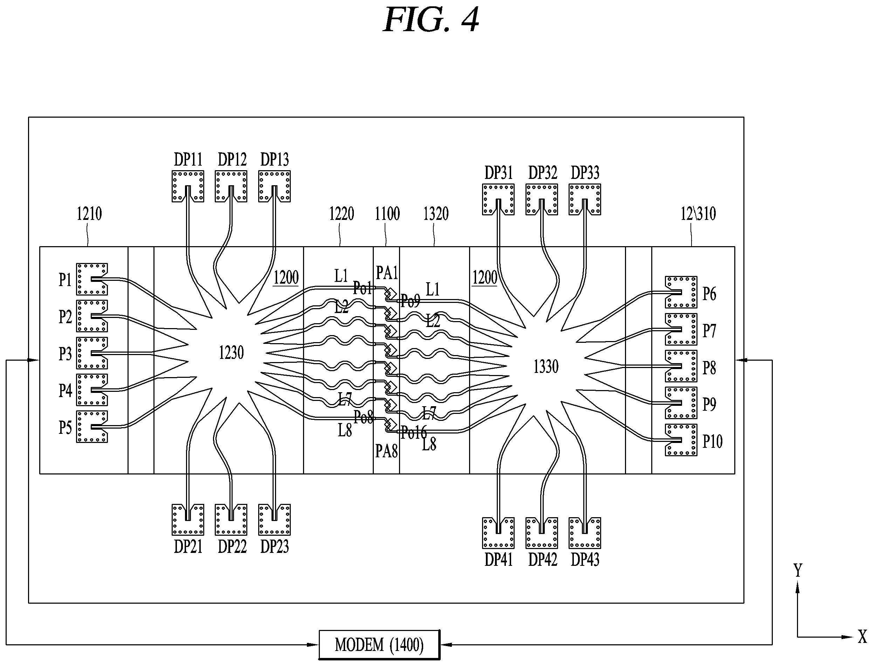

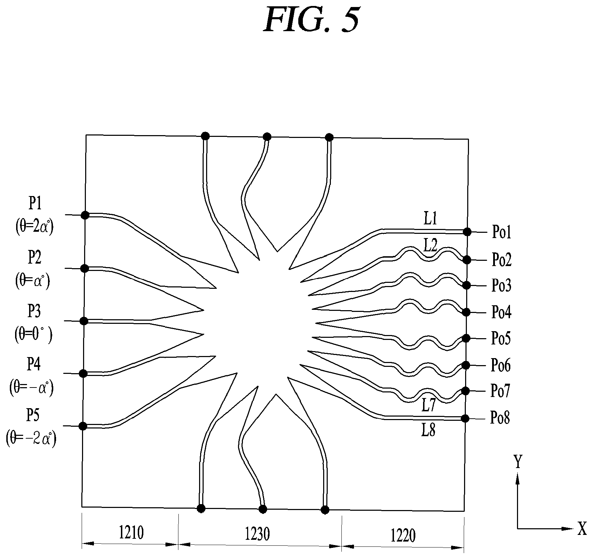

FIGS. 4 to 7 show a signal transmission device including a plurality of Rotman lenses according to the disclosure. FIG. 4 shows the signal transmission device including the plurality of Rotman lenses according to the disclosure. FIG. 5 is an enlarged view of a first Rotman lens and a first output line of the signal transmission device of FIG. 4.

Referring to FIGS. 4 and 5, the signal transmission device 1000 may be configured to include a first input line 1210, a first output line 1220, and a first Rotman lens 1230. The first input line 1210 may include first to fifth ports P1 to P5 connected to one side of the Rotman lens 1230. The first output line 1220 may include first to eighth ports Po1 to Po8 connected to the other side of the Rotman lens 1230. The first to eighth ports Po1 to Po8 of the first output line 1220 may be connected to respective antenna elements PA1 to PA8 of an array antenna 1100.

Beam-forming of the array antenna connected to the first to eighth ports Po1 to Po8 of the first output line 1220 may be performed by applying a signal to one of the first to fifth ports P1 to P5 of the first input line 1210. When a signal is applied to the first port P1, a beam of the array antenna may be steered by 2α. When a signal is applied to the second port P2, the beam of the array antenna may be steered by α. When a signal is applied to the third port P3, a beam of the array antenna may be steered to 0 degrees. When a signal is applied to the fourth port P4, a beam of the array antenna may be steered by -α. When a signal is applied to the fifth port P5, the beam of the array antenna may be steered by -2α. For example, when a signal is applied in the order of the first port P1 to the fifth port P5, the beam of the array antenna may be steered by 25 degrees, 12.5 degrees, 0 degrees, -12.5 degrees, and 25 degrees.

The first input line 1210 including the first to fifth ports P1 to P5 forms beam ports for selecting a beam of the array antenna. The first Rotman lens 1230 positioned between the first input line 1210 and the first output line 1220 is connected to the first input line 1210 and the first output line 1220. The first Rotman lens 1230 may be implemented as a conductive plate on a substrate.

The signal transmission device 1000 may be configured to include a plurality of dummy ports for removing diffused reflection between signals transmitted through the first Rotman lens 1230. Upper and lower regions of the first Rotman lens 1230 may be implemented as dummy ports.

The first to eighth ports Po1 to Po8 of the first output line 1220 form array ports. Signals having different phases at the first to eighth ports Po1 to Po8 of the first output line 1220 may be respectively applied to individual antenna elements of the array antenna. Signals applied to the first to eighth ports Po1 to Po8 may be expressed as A₇ej^{φ0} to A₇ej^{φ7}. Amplitudes A₀ to A₇ of the signals applied to the first to eighth ports Po1 to Po8 may be configured to have the same value. Phases φ0 to φ7 of the signals applied to the first to eighth ports Po1 to Po8 may be determined according to which port among the first to fifth ports P1 to P5 of the first input line 1210 the signal is applied.

When a signal is applied to the first port P1, a phase difference of 2△φ is generated between adjacent ports of the first output line 1220. When a signal is applied to the second port P2, a phase difference of △φ is generated between adjacent ports of the first output line 1220. When a signal is applied to the third port P3, adjacent ports of the first output line 1220 have the same phase value with a phase difference of 0 degrees. When a signal is applied to the fourth port P4, a phase difference of -△φ is generated between adjacent ports of the first output line 1220. When a signal is applied to the fifth port P5, a phase difference of -2△ϕ is generated between adjacent ports of the first output line 1220.

A beam-steering angle θ of the array antenna 1100 may be determined according to the phase difference △φ between adjacent ports of the first output line 1220 as shown in Equation 1. The beam-steering angle θ may be determined according to a wavelength λ corresponding to an operating frequency, a spacing d between adjacent antenna elements of the array antenna 1100, and the phase difference △φ. [Equation 1] $Δ ϕ = \frac{2 π d}{λ} sin θ$

The structure of FIG. 4, including the first and second input lines 1210 and 1310, the first and second Rotman lenses 1230 and 1330, the first and second output lines 1230 and 1330, and the antenna unit 1100, may be implemented with a length of 36.25 mm in an X-axis direction and a width of 28.75 mm in a Y-axis direction. The structure of FIG. 4 may operate at a center frequency of 160 GHz.

Meanwhile, the structure of FIG. 5, including the first input line 1210, the first Rotman lens 1230, and the first output line 1220, may be implemented with a length of 13.5 mm in the X-axis direction and a width of 14 mm in the Y-axis direction. A substrate on which the first input line 1210, the first Rotman lens 1230, and the first output line 1220 are formed may have a thickness of 0.05 mm. The structure of FIG. 5, including the first input line 1210, the first Rotman lens 1230, and the first output line 1220, may operate at a center frequency of 160 GHz. In the structure of FIG. 5, a focal angle, a beam-steering angle, and a focal length may be set to 25 degrees, 25 degrees, and 3.59 mm (1.91 λ₀), respectively.

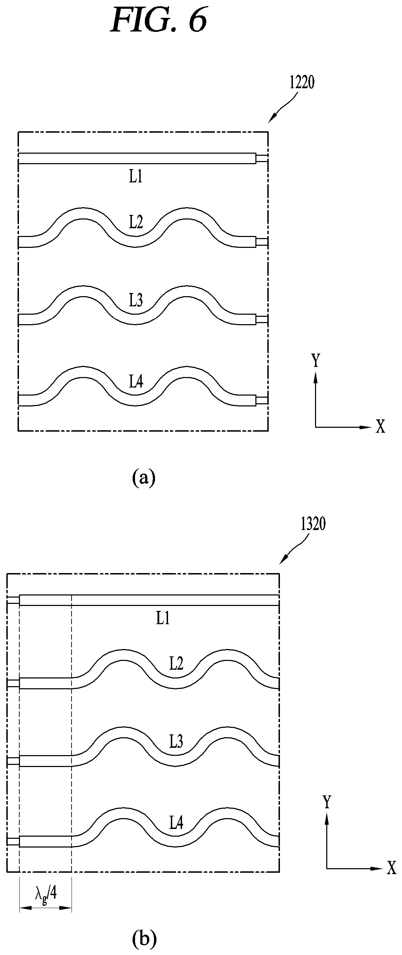

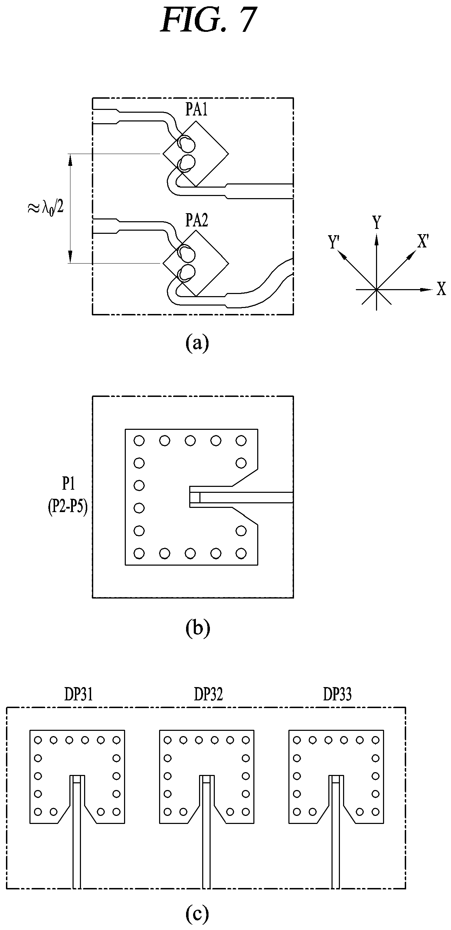

FIG. 6 is a diagram comparing first output lines and second output lines of the signal transmission device of FIG. 4. FIG. 7 is an enlarged view of adjacent patch antennas of the antenna unit, a port of a first input line, and dummy ports of FIG. 4.

Referring to FIGS. 4 and 5, and (a) of FIG. 6, a first line L1 among the first output lines 1220 is formed as a straight line. A second line L2 among the first output lines 1220 is formed as a curved line having a first height between a lower end and an upper end in the Y-axis direction. A third line L3 among the first output lines 1220 is formed as a curved line having a second height larger than the first height between the lower end and the upper end in the Y-axis direction. A fourth line L4 among the first output lines 1220 is formed as a curved line having a third height larger than the second height between the lower end and the upper end in the Y-axis direction.

Referring to FIGS. 4 and 5, and (b) of FIG. 6, a first line L1 among the second output lines 1320 is formed as a straight line. A second line L2 among the second output lines 1320 is formed as a curved line having a first height between a lower end and an upper end in the Y-axis direction. A third line L3 among the second output lines 1320 is formed as a curved line having a second height larger than the first height between the lower end and the upper end in the Y-axis direction. A fourth line L4 among the second output lines 1320 is formed as a curved line having a third height larger than the second height between the lower end and the upper end in the Y-axis direction.

Referring to FIGS. 4 to 6, a signal transmission length of the second output line 1320 is formed to be larger than a signal transmission length of the first output line 1220 by a predetermined length, such that the antenna unit 1100 may be configured to implement a plurality of polarizations. The signal transmission length of the second output line 1320 may be formed to be larger than the signal transmission length of the first output line 1220 by a quarter of a wavelength λg.

Referring to FIGS. 4 and 5, and (a) of FIG. 7, adjacent antenna elements PA1 and PA2 of the antenna unit 1100 may be spaced apart from each other in the Y-axis direction by 0.5 times a wavelength λg. The distance between the adjacent antenna elements PA1 and PA2 is not limited to 0.5 times the wavelength λg, and may be set to 0.5 to 0.8 times the wavelength λg depending on applications. A beam-steering angle may be increased by decreasing the distance between the adjacent antenna elements PA1 and PA2. Meanwhile, antenna directivity may be improved by increasing the distance between the adjacent antenna elements PA1 and PA2. Other adjacent antenna elements of the antenna unit 1100 may also be spaced apart at the same distance.

Meanwhile, the antenna elements PA1 and PA2 of the antenna unit 1100 and the first and second output lines 1220 and 1320 may be arranged on different substrate (layers) or on the same substrate (layer). When the antenna elements PA1 and PA2 and the first and second output lines 1220 and 1320 are arranged on different layers, feed lines implemented as the first and second output lines 1220 and 1320 may be implemented in a coupling feed structure or a via feed structure. When the antenna elements PA1 and PA2 and the first and second output lines 1220 and 1320 are arranged on the same layer, the feed lines implemented as the first and second output lines 1220 and 1320 may be implemented in a direct feed structure. When the feed lines are implemented in the coupling feed structure, bandwidth characteristics of the antenna can be improved compared to the direct feed structure.

Referring to FIGS. 4 and 5, and (b) of FIG. 7, the first port P1 of the first input line 1210 may be electrically connected to a corresponding line of the first Rotman lens 1230. A plurality of circular holes, from which a metal pattern has been removed, may be formed along an inner portion of the boundary of the first port P1 of the first input line 1210. The plurality of circular holes, from which a metal pattern has been removed, may also be formed along an inner portion of the boundary of the other ports P2 to P5 of the first input line 1210. Meanwhile, the plurality of circular holes, from which a metal pattern has been removed, may also be formed along an inner portion of the boundary of the ports P6 to P10 of the second input line 1310.

Referring to FIGS. 4 and 5, and (b) of FIG. 7, the dummy ports DP31 to DP33 may be connected to respective lines of the second Rotman lens 1330. Each of the dummy ports DP31 to DP33 may include a plurality of circular holes, from which a metal pattern has been removed, and which are formed along an inner portion of the boundary thereof. Dummy ports DP11 to DP13 may be connected to respective lines of the first Rotman lens 1230. Each of the dummy ports DP31 to DP33 may include a plurality of circular holes, from which a metal pattern has been removed, and are formed along an inner portion of the boundary thereof.

Referring to FIGS. 4 to 7, the signal transmission device 1000 including the plurality of Rotman lenses may be configured to include an antenna unit 1100, a first signal line 1200, and a second signal line 1300.

The antenna unit 1100 may include a plurality of patch antennas PA1 to PA8. The antenna unit 1100 may be a one-dimensional array antenna including a plurality of patch antennas PA1 to PA8 spaced apart from each other in a vertical axis direction. The antenna unit 1100 is not limited to a 1x8 array antenna, and may be configured to include any number of antenna elements.

The first signal line 1200 may be electrically connected to each of the plurality of patch antennas PA1 to PA8 of the antenna unit 1100 to cause the plurality of patch antennas to operate in a first polarization. The first signal line 1200 may include a first input line 1210, a first output line 1220, and a first Rotman lens 1230. The first input line 1210 may be configured to be connected to a modem 1400. The first output line 1220 may be configured to be connected to the antenna unit 1100. The first Rotman lens 1230 may be positioned between the first input line 1210 and the first output line 1220.

The second signal line 1300 may be electrically connected to each of the plurality of patch antennas PA1 to PA8 of the antenna unit 1100 to cause the plurality of patch antennas to operate in a second polarization. The second signal line 1300 may include a second input line 1310, a second output line 1320, and a second Rotman lens 1330. The second input line 1310 may be configured to be connected to the modem 1400. The second output line 1320 may be configured to be connected to the antenna unit 1100. The second Rotman lens 1330 may be positioned between the second input line 1310 and the second output line 1320.

A signal transmission length of the second signal line 1300 may be formed to be larger than a signal transmission length of the first signal line 1200 by a predetermined length, such that the antenna unit 1100 can be configured to implement a plurality of polarizations. The signal transmission length of the second signal line 1300 may be formed to be larger than the signal transmission length of the first signal line 1200 by a quarter of a wavelength λg. The signal transmission length of the second output line 1320 may be formed to be larger than the signal transmission length of the first output line 1220 by a quarter of the wavelength λg.

The first input line 1210 and the second input line 1220 may include a plurality of ports so as to support a plurality of polarizations. The first input line 1210 may include first to fifth ports P1 to P5 connected to one side of the first Rotman lens 1230. The second input line 1310 may include sixth to tenth ports P6 to P10 connected to the other side of the second Rotman lens 1330.

The modem 1400 may control a signal of a first polarization to be beam-formed in the vertical axis direction, in which the plurality of patch antennas PA1 to PA8 are arranged, by changing a port to which a signal is input to any one of the first to fifth ports P1 to P5. The modem 1400 may control a signal of a second polarization to be beam-formed in the vertical axis direction, in which the plurality of patch antennas PA1 to PA8 are arranged, by changing a port to which a signal is input to any one of the sixth to tenth ports P6 to P10. In this regard, the first polarization may be set to vertical polarization and the second polarization may be set to horizontal polarization, but not limited thereto. The first and second polarizations may be arbitrary linear polarizations orthogonal to each other.

The modem 1400 may control a beam of the first polarization or the second polarization to be steered by 2α by applying a signal to the first port P1 or the sixth port P6. For example, a beam of the vertical polarization may be steered by +25 degrees by applying a signal to the first port P1. Alternatively, a beam of the horizontal polarization may be steered by +25 degrees by applying a signal to the sixth port P6.

The modem 1400 may control the beam of the first polarization or the second polarization to be steered by α by applying the signal to the second port P2 or the seventh port P7. For example, the beam of the vertical polarization may be steered by +12.5 degrees by applying the signal to the second port P2. Alternatively, the beam of the horizontal polarization may be steered by +25 degrees by applying the signal to the seventh port P7.

The modem 1400 may control the beam of the first polarization or the second polarization to be steered to 0 degrees by applying a signal to the third port P3 or the eighth port P8. For example, the beam of the vertical polarization may be steered to 0 degrees by applying a signal to the third port P3. Alternatively, the beam of the horizontal polarization may be steered to 0 degrees by applying a signal to the eighth port P8.

The modem 1400 may control the beam of the first polarization or the second polarization to be steered by -α by applying a signal to the fourth port P4 or the eighth port P8. For example, the beam of the vertical polarization may be steered by -12.5 degrees by applying a signal to the fourth port P4. Alternatively, the beam of the horizontal polarization may be steered by -12.5 degrees by applying a signal to the eighth port P8.

The modem 1400 may control the beam of the first polarization or the second polarization to be steered by -2α by applying a signal to the fifth port P5 or the tenth port P10. For example, the beam of the vertical polarization may be steered by -25 degrees by applying a signal to the fifth port P5. Alternatively, a beam of the horizontal polarization may be steered by -25 degrees by applying a signal to the tenth port P10.

The modem 1400 may control a circular polarization beam to be steered by simultaneously inputting signals to one port among the first input lines 1210 and one port among the second input lines 1310. The modem 1400 may control ports, to which signals are input, so that any one pair of first to fifth pairs of the first port P1 and the sixth port P6 to the fifth port P5 and the tenth port P10 is selected. The modem 1400 may control a circular polarization signal to be beam-formed by changing the selected pair of ports.

The modem 1400 may control a circular polarization beam to be steered by 2α by applying a first signal to the first port P1 and a second signal to the sixth port P6. For example, a circular polarization beam may be steered by +25 degrees by applying the first signal to the first port P1 and the second signal to the sixth port P6.

The modem 1400 may control the circular polarization beam to be steered by α by applying the first signal to the second port P2 and the second signal to the seventh port P7. For example, the circular polarization beam may be steered by +12.5 degrees by applying the first signal to the second port P2 and the second signal to the seventh port P7.

The modem 1400 may control the beam of the first polarization or the second polarization to be steered to 0 degrees by applying the first signal to the third port P3 and the second signal to the eighth port P8. For example, the circular polarization beam may be steered to 0 degrees by applying the first signal to the third port P3 and the second signal to the eighth port P8.

The modem 1400 may control the circular polarization beam to be steered by -α by applying the first signal to the fourth port P4 and the second signal to the eighth port P8. For example, the circular polarization beam may be steered by -12.5 degrees by applying the first signal to the fourth port P4 and the second signal to the eighth port P8.

The modem 1400 may control the circular polarization beam to be steered by -2α by applying the first signal to the fifth port P5 and the second signal to the tenth port P10. For example, the circular polarization beam may be steered by -25 degrees by applying the first signal to the fifth port P5 and the second signal to the tenth port P10.

Meanwhile, the signal transmission device 1000 according to this specification may be configured to include a plurality of dummy ports for removing diffused reflection. The signal transmission device 1000 may be configured to include first dummy ports DP11 to DP13, second dummy ports DP21 to DP23, third dummy ports DP31 to DP33, and fourth dummy ports DP41 to DP43.

The first dummy ports DP11 to DP13 may be configured to be connected to lines in an upper region of the first Rotman lens 1230. The second dummy ports DP21 to DP23 may be configured to be connected to lines in a lower region of the first Rotman lens 1230. The upper region of the first Rotman lens 1230 corresponds to a region having positive coordinates with respect to the Y-axis. The lower region of the first Rotman lens 1230 corresponds to a region having negative coordinates with respect to the Y-axis.

The third dummy ports DP31 to DP33 may be configured to be connected to lines in an upper region of the second Rotman lens 1330. The fourth dummy ports DP41 to DP43 may be configured to be connected to lines in a lower region of the second Rotman lens 1330. The upper region of the second Rotman lens 1330 corresponds to a region having positive coordinates with respect to the Y-axis. The lower region of the second Rotman lens 1330 corresponds to a region having negative coordinates with respect to the Y-axis.

The number of first dummy ports DP11 to DP13 and the number of second dummy ports DP21 to DP23 may each be set to be smaller than the number of ports P1 to P5 of the first input line 1210. Accordingly, a length of the signal transmission device 1000 along the X-axis can be minimized by minimizing the number of dummy ports while supporting a plurality of polarizations and removing diffused reflections.

The number of third dummy ports DP31 to DP33 and the number of fourth dummy ports DP41 to DP43 may each be set to be smaller than the number of ports P6 to P10 of the second input line 1310. Accordingly, a length of the signal transmission device 1000 along the X-axis can be minimized by minimizing the number of dummy ports while supporting a plurality of polarizations and removing diffused reflections.

A sum of the number of the first dummy ports DP11 to DP13 and the number of the second dummy ports DP21 to DP23 may be set to be greater than the number of the ports P1 to P5 of the first input line 1210. A sum of the number of the third dummy ports DP31 to DP33 and the number of the fourth dummy ports DP41 to DP43 may be set to be greater than the number of the ports P6 to P10 of the second input line 1310.

As signals are applied to the ports P1 to P5 of the first input line 1210 and the ports P6 to P10 of the second input line 1310, beam-forming of the array antenna may be performed. Accordingly, the ports P1 to P5 of the first input line 1210 and the ports P6 to P10 of the second input line 1310 may be referred to as beam ports.

The plurality of patch antennas PA1 to PA8 may include first to eighth patch antennas PA1 to PA8. The first output line 1220 may include first to eighth ports Po1 to Po8 formed to apply signals of a first polarization to the first to eighth patch antennas PA1 to PA8. The second output line 1320 may include ninth to sixteenth ports Po9 to Po16 formed to apply signals of a second polarization to the first to eighth patch antennas PA1 to PA8. The first to eighth ports Po1 to Po8 and the ninth to sixteenth ports Po9 to Po16 are connected to the array antenna. Accordingly, the first to eighth ports Po1 to Po8 and the ninth to sixteenth ports Po9 to Po16 may be referred to as array ports.

Adjacent patch antennas among the first to eighth patch antennas PA1 to PA8 may be arranged to be spaced apart by a predetermined spacing. Adjacent patch antennas among the first to eighth patch antennas PA1 to PA8 may be arranged to be spaced apart by a spacing of a half-wavelength λ₀/2, which is 1/2 of a wavelength in air λ₀.

Each of the first to eighth patch antennas PA1 to PA8 may be formed as a rectangular patch antenna rotated by 45 degrees with respect to a first axis (e.g., X-axis). An end of the first output line 1220 may be coupled to the first to eighth patch antennas PA1 to PA8 at an angle of -45 degrees with respect to the first axis. An end of the second output line 1320 may be coupled to the first to eighth patch antennas PA1 to PA8 at an angle of 45 degrees with respect to the first axis.

Some lines of the first output line 1220 may be formed in a linear structure, and the remaining lines may be formed in a curved structure. Some lines of the second output line 1220 may be formed in a linear structure, and the remaining lines may be formed in a curved structure.

Outermost upper and lower lines L1 and L8 among the first output lines 1220 may be formed in a linear structure, and the remaining lines L2 to L7 may be formed in a curved structure. Outermost upper and lower lines L1 and L8 among the second output lines 1320 may be formed in a linear structure, and the remaining lines L2 to L7 may be formed in a curved structure.

First to eighth ports Po1 to Po8 of the first output line 1220 may be implemented to form a first polarization. Ninth to sixteenth ports Po9 to Po16 of the second output lines 1320 may be implemented to form a second polarization. The first polarization may be set to vertical polarization and the second polarization may be set to horizontal polarization, but are not limited thereto. The first and second polarizations may be arbitrary linear polarizations orthogonal to each other.

The modem 1400 allows first to eighth signals to be applied to the first to eighth ports Po1 to Po8 in a third axial direction of the first to eighth patch antennas PA1 to PA8, such that a first polarization is formed in the first to eighth patch antennas PA1 to PA8. The third axial direction corresponds to an X'-axis direction, which is an axis rotated by 45 degrees with respect to the first axis.

The modem 1400 allows ninth to sixteenth signals to be applied to the ninth to sixteenth ports Po9 to Po16 in a fourth axial direction perpendicular to the third axis of the first to eighth patch antennas PA1 to PA8, such that a second polarization is formed in the first to eighth patch antennas PA1 to PA8. The fourth axial direction corresponds to a Y'-axis direction, which is an axis rotated by 45 degrees with respect to the second axis direction.

The modem 1400 may allow circular polarization to be formed in the first to eighth patch antennas PA1 to PA8 by applying the first to eighth signals to the first to eighth ports Po1 to Po8 and applying the ninth to sixteenth signals to the ninth to sixteenth ports Po9 to Po16.

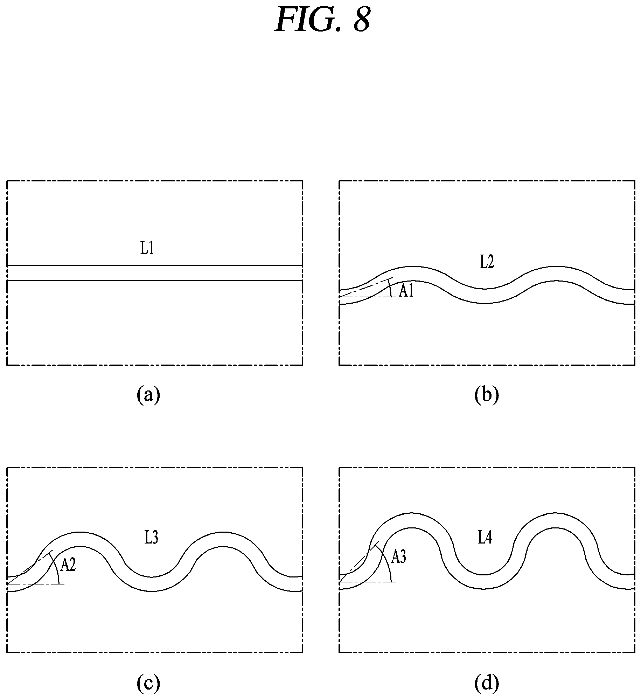

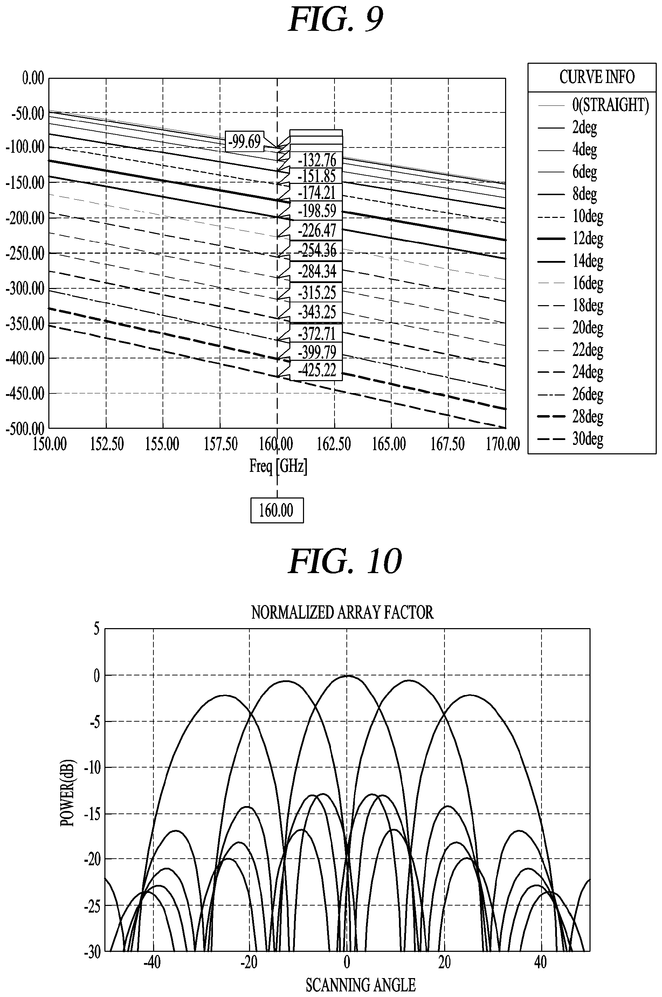

Meanwhile, the output lines of the signal transmission device according to the disclosure may be formed in a linear structure or a curved structure. In this regard, FIG. 8 shows output lines of a signal transmission device formed in a linear structure or a curved structure. FIG. 9 shows phase values for each frequency according to an inclination angle of a curve in the output lines of FIG. 8.

Referring to FIG. 7 and (a) of FIG. 8, a first line L1 of the first output line 1220 may be formed as a straight line having a length of 3 mm and a width of 145 um. The first line L1 having the length of 3 mm and the width of 145 um has an insertion loss of 0.51 dB at a center frequency of 160 GHz. Referring to FIG. 7 and (b) of FIG. 8, a second line L2 of the first output line 1220 may be formed as a curved line having a length of 3 mm, a width of 145 um, and an inclination angle A1 of 10 degrees. The second line L2 having the length of 3 mm, the width of 145 um, and the inclination angle A1 of 10 degrees has an insertion loss of 0.86 dB at the center frequency of 160 GHz.

Referring to FIG. 7 and (c) of FIG. 8, a third line L3 of the first output line 1220 may be formed as a straight line having a length of 3 mm, a width of 145 um, and an inclination angle A2 of 20 degrees. The third line L3 having the length of 3 mm, the width of 145 um, and the inclination angle A2 of 20 degrees has an insertion loss of 1.41 dB at the center frequency of 160 GHz. Referring to FIG. 7 and (d) of FIG. 8, a fourth line L4 of the first output line 1220 may be formed as a curved line having a length of 3 mm, a width of 145 um, and an inclination angle A3 of 30 degrees. The fourth line L4 having the length of 3 mm, the width of 145 um, and the inclination angle A3 of 30 degrees has an insertion loss of 1.72 dB at the center frequency of 160 GHz.

Referring to (a) of FIG. 6, and FIGS. 8 and 9, the first line L1 having an inclination angle of 0 degrees has a phase value of -95 degrees at 160 GHz. The second line L2 having an inclination angle A1 of 10 degrees has a phase value of -151 degrees at 160 GHz. The third line L3 having an inclination angle A2 of 20 degrees has a phase value of -284 degrees at 160 GHz. The fourth line L4 having an inclination angle A3 of 30 degrees has a phase value of -425 degrees at 160 GHz.

Referring to FIGS. 4 to 6 and 8, in designing the first and second Rotman lenses 1230 and 1330, the output lines 1220 and 1320 may be designed as meander lines having a curved structure in order to transmit specific phase values of signals to the antenna unit 1100. The first and second output lines 1220 and 1320 configured as the meander lines having the curved structure may be connected to respective antenna elements of the array antenna of the antenna unit 1100. Ends of the first and second output lines 1220 and 1320 connected to the respective antenna elements of the array antenna of the antenna unit 1100 may form array ports.

In this regard, signals of the same phase or different phases may be applied to each antenna element of the antenna unit 1100 according to which port among the first and second input lines 1210 and 1310 the signals are applied. The signal applied to each antenna element of the antenna unit 1100 is variable to a different phase value.

Compared to the first line L1 having the linear structure, the fourth line L4 having a curved structure with an inclination angle A3 of 30 degrees has an insertion loss increased by about 1.2 dB. However, the lines having different inclination angles in the first and second output lines 1220 and 1320 are formed in a symmetrical structure in the Y-axis direction. Accordingly, the magnitude of the signal applied to each antenna element of the antenna unit 1100 is also formed in a symmetrical structure in the Y-axis direction, so that a beam pattern of the antenna unit 1100 is also formed in a symmetrical structure. In this regard, FIG. 10 shows beam patterns of the antenna unit of the signal transmission device of FIG. 4.

Referring to FIGS. 4 and 10, when a signal is applied to the third or eighth port P3 or P8 of the first or second input line 1210 or 1310, a beam pattern BP3 radiated through the antenna unit 1100 is formed to steer 0 degrees. The beam pattern BP3 steering 0 degrees is formed in a laterally symmetrical structure. The magnitude of the signal applied to each antenna element of the antenna unit 1100 is also formed in a symmetrical structure in the Y-axis direction, so that the beam pattern of the antenna unit 1100 is also formed in a symmetrical structure in the Y-axis direction. A peak gain of the antenna unit 1100 implemented as a 1x8 array antenna has a value of 15.1 dBi.

When a signal is applied to the first or sixth port P1 or P6 of the first or second input line 1210 or 1310, a beam pattern BP1 radiated through the antenna unit 1100 is formed to steer 30 degrees. The peak gain of the antenna unit 1100 implemented as a 1x8 array antenna has a value of 13.6 dBi. When a signal is applied to the fifth or tenth port P5 or P10 of the first or second input line 1210 or 1310, a beam pattern BP5 radiated through the antenna unit 1100 is formed to steer -30 degrees. The peak gain of the antenna unit 1100 implemented as a 1x8 array antenna has a value of 13.1 dBi. The beam pattern BP1 and the beam pattern BP5 are formed in an almost symmetrical structure with respect to the Y-axis, and peak gains also have similar values.

When a signal is applied to the second or seventh port P2 or P7 of the first or second input line 1210 or 1310, a beam pattern BP2 radiated through the antenna unit 1100 is formed to steer 15 degrees. The peak gain of the antenna unit 1100 implemented as a 1x8 array antenna has a value of 14.3 dBi. When a signal is applied to the fourth or ninth port P4 or P9 of the first or second input line 1210 or 1310, a beam pattern BP4 radiated through the antenna unit 1100 is formed to steer -15 degrees. The peak gain of the antenna unit 1100 implemented as a 1x8 array antenna has a value of 14.1 dBi. The beam pattern BP2 and the beam pattern BP4 are formed in an almost symmetrical structure with respect to the Y-axis, and peak gains also have similar values.

Meanwhile, a signal transmission device according to another embodiment of the disclosure may be coupled with a two-dimensional array antenna to implement beam-forming in horizontal axis and vertical axis directions.

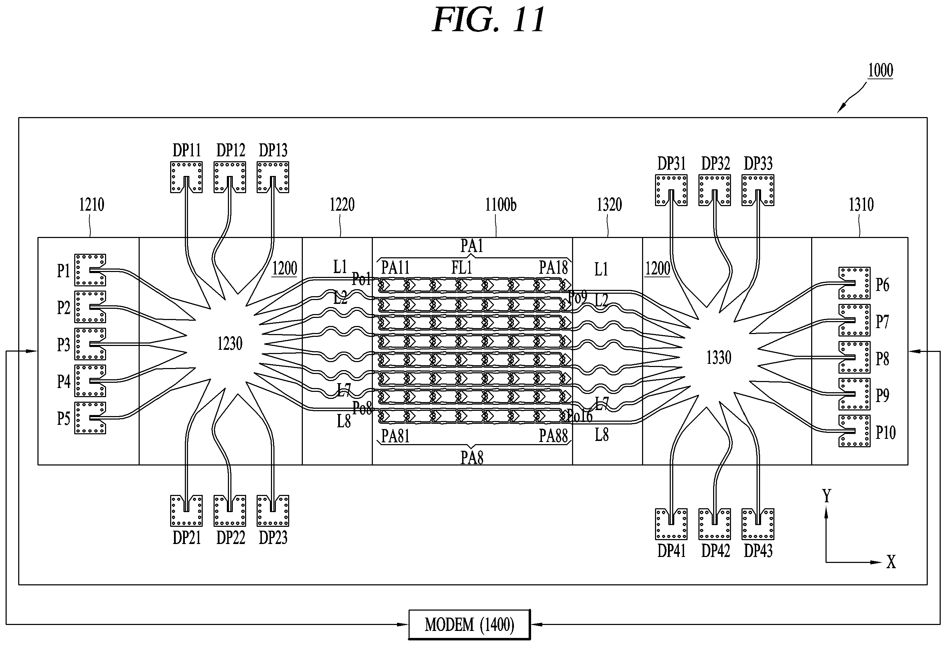

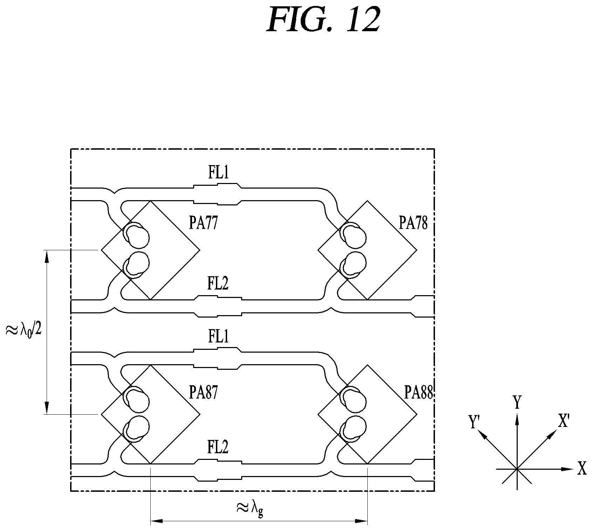

In this regard, FIG. 11 shows a signal transmission device including a plurality of Rotman lenses and a two-dimensional array antenna structure according to the disclosure. FIG. 12 is an enlarged view of a partial area of the two-dimensional array antenna of FIG. 11.

Referring to FIGS. 11 and 12, the signal transmission device 1000b including a plurality of Rotman lenses may be configured to include an antenna unit 1100b, a first signal line 1200, and a second signal line 1300.

The antenna unit 1100b may include a plurality of patch antennas PA11-PA18 to PA81-PA88. The antenna unit 1100 may be a two-dimensional array antenna including a plurality of patch antennas PA11-PA18 to PA81-PA88 spaced apart from each other in horizontal axis and vertical axis directions. The antenna unit 1100 is not limited to a 1x8 array antenna, and may be configured to include any number of antenna elements.

As described above, the first signal line 1200 may include a first input line 1210, a first output line 1220, and a first Rotman lens 1230. The second signal line 1300 may include a second input line 1310, a second output line 1320, and a second Rotman lens 1330.

The plurality of patch antennas PA11 to PA18 to PA81 to PA88 may include first patch antennas PA11 to PA18 to eighth patch antennas PA81 to PA88 arranged in a two-dimensional structure. The first output line 1220 may include first to eighth ports Po1 to Po8 formed to apply signals of a first polarization to the first patch antennas PA1 to the eighth patch antennas PA8. The second output line 1320 may include ninth to sixteenth ports Po9 to Po16 formed to apply signals of a second polarization to the first patch antennas PA1 to the eighth patch antennas PA8.

Each of the first patch antennas PA11-PA18 to the eighth patch antennas PA81-PA88 may include a plurality of antenna elements spaced apart from each other in a first axial direction. Adjacent patch antenna elements in the first axial direction of each of the first patch antennas PA11-PA18 to the eighth patch antennas PA81-PA88 may be arranged to be spaced apart by a length corresponding to a wavelength λg associated with an operating frequency of the antenna unit 1100b. Accordingly, adjacent antenna elements arranged in an X-axis direction, which is the first axial direction, may be fed in a series-feeding manner.

Adjacent patch antennas among the first patch antennas PA1 to the eighth patch antennas PA8 in a Y-axis direction, which is a second axial direction, may be arranged to be spaced apart by a predetermined spacing. Adjacent patch antennas among the first patch antennas PA1 to the eighth patch antennas PA8 in the Y-axis direction may be arranged to be spaced apart by a spacing of a half-wavelength λ₀/2.

In this regard, the signal transmission device 1000 having the two-dimensional array antenna may further include a first feed line FL1 and a second feed line FL2. The first feed line FL1 may extend from the first output line 1220 to the rightmost patch antenna element. The second feed line FL2 may extend from the second output line 1320 to the leftmost patch antenna element.

The modem 1400 may adjust the polarization of the antenna unit 1100b by applying a signal to the first feed line FL1 and/or the second feed line FL2. The modem 1400 may control the antenna unit 1100b to radiate a signal of a first polarization by applying a first signal to the first feed line FL1. The modem 1400 may control the antenna unit 1100b to radiate a signal of a second polarization perpendicular to the first polarization by applying a second signal to the second feed line FL2. The modem 1400 may control the antenna unit 1100b to radiate a circular polarization signal by applying the first signal to the first feed line FL1 and the second signal to the second feed line FL2.

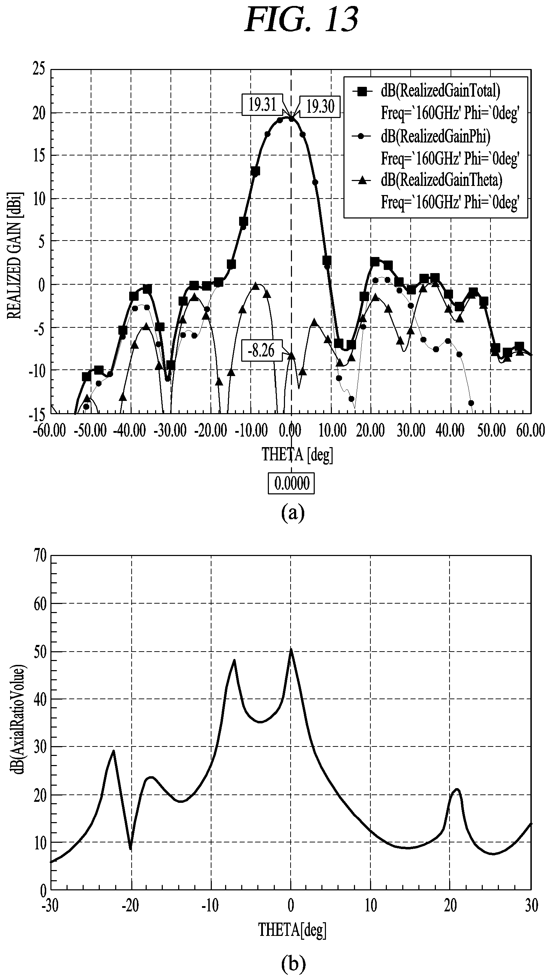

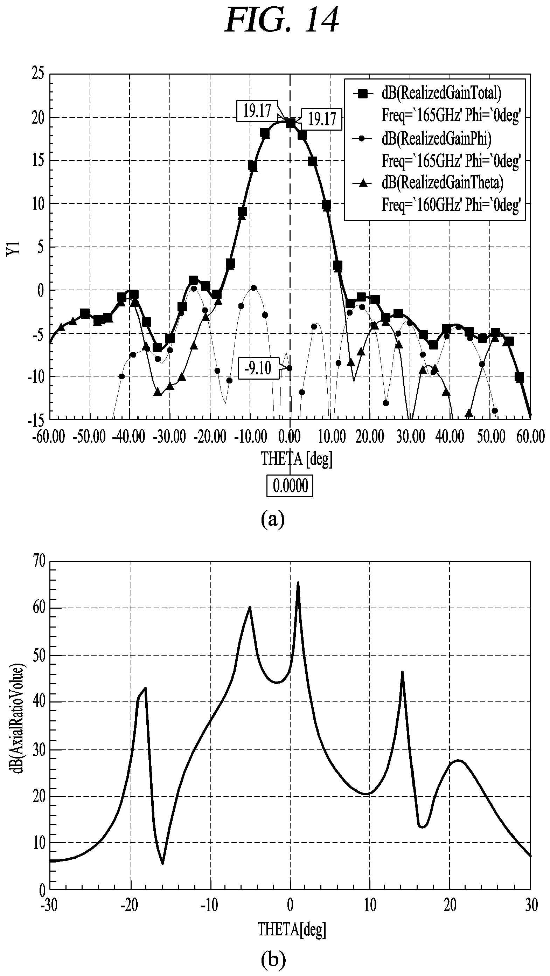

Meanwhile, in the signal transmission device having a one-dimensional or two-dimensional array antenna, different polarizations and beam patterns may be implemented according to which port among the first and second input lines 1210 and 1310 a signal is applied. In this regard, FIGS. 13 and 14 show beam patterns and axial ratios when a signal is applied to a third port of the first input line or an eighth port of the second input line of the signal transmission device of FIG. 11.

Referring to FIG. 11 and (a) of FIG. 13, when a signal is applied to the third port P3 of the first input line 1210, a beam pattern steering 0 degrees and having vertical polarization is formed. The beam peak of the vertical polarization signal in the 0-degree direction is 19.3 dBi, and the horizontal polarization signal level in the 0-degree direction is -8.2 dBi. Accordingly, cross-polarization discrimination between the vertical and horizontal signals has a value of 27 dBc or more.

Referring to FIG. 11, and (a) and (b) of FIG. 13, an axial ratio, which is a ratio of the vertical polarization signal to the horizontal signal, has a value of about 50 dB in a front direction. Accordingly, when a signal is applied to the third port P3 of the first input line 1210, a vertical polarization signal is mainly radiated.

Referring to FIG. 11 and (a) of FIG. 14, when a signal is applied to the eighth port P8 of the second input line 1310, a beam pattern steering 0 degrees and having horizontal polarization is formed. The beam peak of the horizontal polarization signal in the 0-degree direction is 19.2 dBi, and the vertical polarization signal level in the 0-degree direction is -9.1 dBi. Accordingly, the cross-polarization discrimination between the horizontal and vertical signals has a value of 28 dBc or more.

Referring to FIG. 11, (a) and (b) of FIG. 14, the axial ratio, which is a ratio of the horizontal polarization signal to the vertical signal, has a value of 50 dB or more in the front direction. Accordingly, when a signal is applied to the eighth port P8 of the first input line 1210, a horizontal polarization signal is mainly radiated.

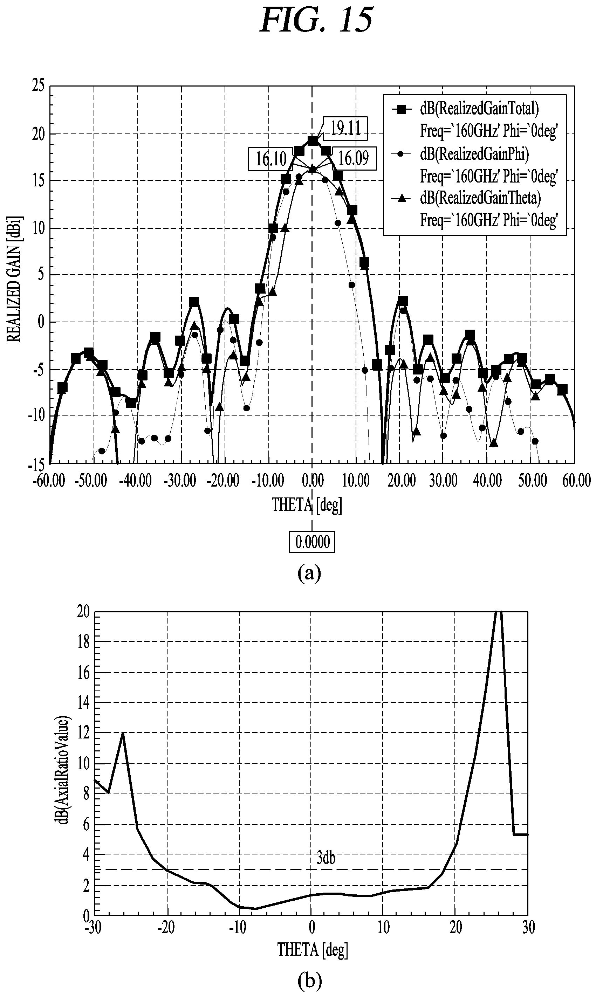

Meanwhile, it may be configured to radiate a circular polarization signal by simultaneously applying signals to the first and second input lines 1210 and 1310. In this regard, FIG. 15 shows beam patterns when signals are simultaneously applied to the third port of the first input line and the eighth port of the second input line of the signal transmission device of FIG. 11.

Referring to FIG. 11 and (a) of FIG. 15, when signals are simultaneously applied to the third port P3 of the first input line 1210 and the eighth port P8 of the second input line 1310, a beam pattern steering 0 degrees and having circular polarization is formed. In the 0-degree direction, the vertical polarization signal level and the horizontal signal level are almost similar values of 16.10 dBi and 16.09 dBi, respectively. Accordingly, the circular polarization signal level in the 0-degree direction has a value of 19.11 dBi.

Referring to FIG. 11, (a) and (b) of FIG. 15, the axial ratio, which is the ratio of the vertical polarization signal to the horizontal polarization signal, has a value of 3 dB or less between -20 and 18 degrees. In (a) of FIG. 14, a main beam associated with a 3 dB beam width of the circular polarization signal is formed at ±10 degrees or less. Accordingly, the axial ratio in the region where the main beam is formed has a value of 3 dB or less, thereby satisfying requirements for circular polarization performance.

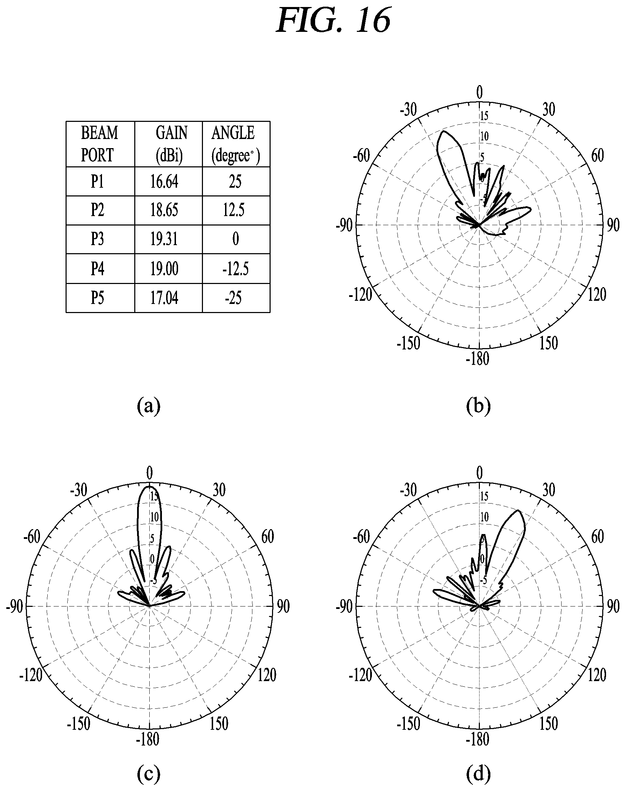

As described above, in the signal transmission device having a one-dimensional or two-dimensional array antenna, different polarizations and beam patterns can be implemented according to which port among the first and second input lines 1210 and 1310 a signal is applied. In this regard, FIG. 16 shows gains, beam-steering angles, and beam patterns according to signal application for each port of the first input line of FIG. 11.

(a) of FIG. 16 shows gains and beam-steering angles according to signal application for each port of the first input line of FIG. 11. (b) to (d) of FIG. 16 show beam patterns when signals are applied to the first, third, and fifth ports.

Referring to FIGS. 11 and 16, when a signal is applied to the first port P1 of the first input line 1210, a beam of the vertical polarization having a gain of 16.6 dBi and a beam-steering angle of 25 degrees is formed. When a signal is applied to the third port P3 of the first input line 1210, a beam of the vertical polarization having a gain of 19.3 dBi and a beam-steering angle of 0 degrees is formed. When a signal is applied to the fifth port P5 of the first input line 1210, a beam of the vertical polarization having a gain of 17.0 dBi and a beam-steering angle of -25 degrees is formed. Referring to FIGS. 4, 11, and 16, a beam of the vertical polarization can be formed while maintaining a scan loss value of 3 dB or less within a beam coverage area of ±25 degrees.

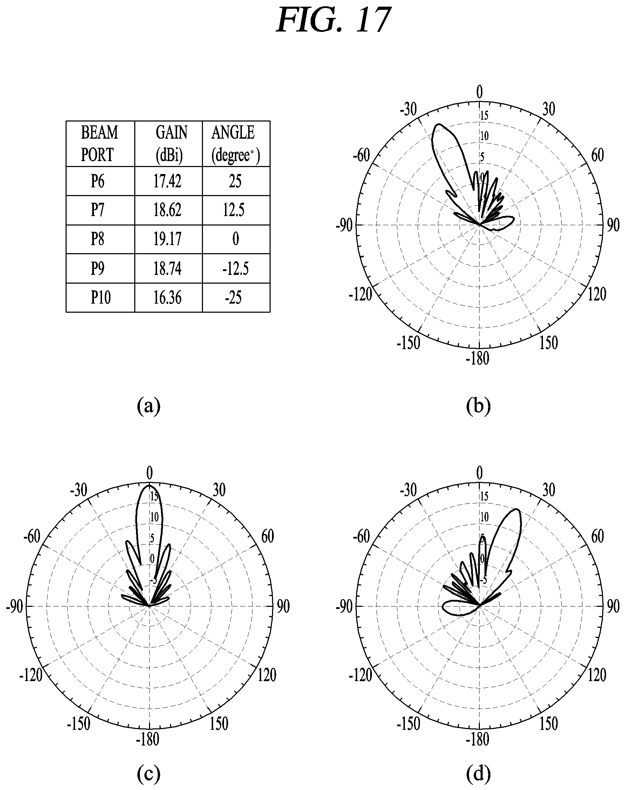

FIG. 17 shows gains, beam-steering angles, and beam patterns according to signal application for each port of the second input line of FIG. 11.

(a) of FIG. 17 shows gains and beam-steering angles according to signal application for each port of the second input line of FIG. 11. (b) to (d) of FIG. 17 show beam patterns when signals are applied to sixth, eighth, and tenth ports, respectively.

Referring to FIGS. 11 and 17, when a signal is applied to the sixth port P6 of the second input line 1310, a beam of the horizontal polarization having a gain of 17.4 dBi and a beam-steering angle of 25 degrees is formed. When a signal is applied to the eighth port P8 of the second input line 1310, a beam of the horizontal polarization having a gain of 19.1 dBi and a beam-steering angle of 0 degrees is formed. When a signal is applied to the tenth port P10 of the second input line 1310, a beam of the horizontal polarization having a gain of 16.3 dBi and a beam-steering angle of -25 degrees is formed. Referring to FIGS. 4, 11, and 17, a beam of the horizontal polarization can be formed while maintaining a scan loss value of 3 dB or less within a beam coverage area of ±25 degrees.

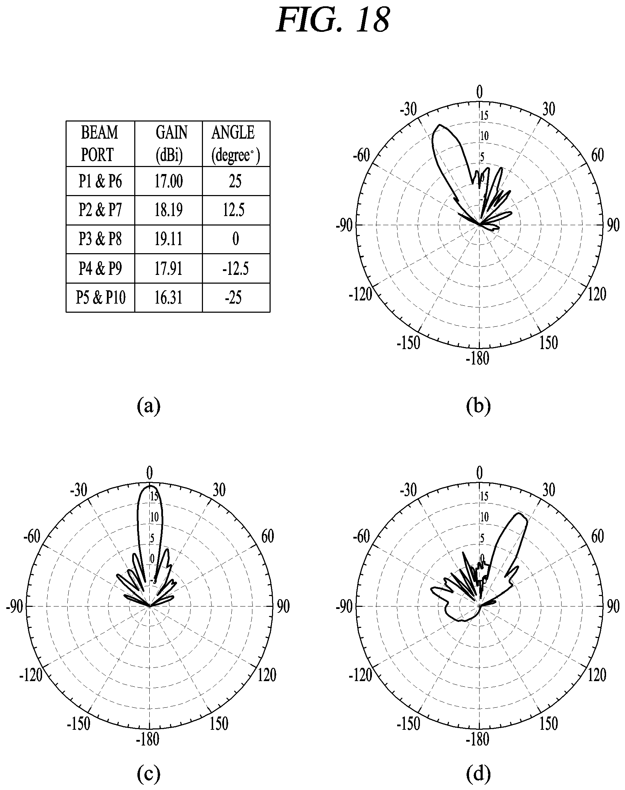

FIG. 18 shows gains, beam-steering angles, and beam patterns according to signal application for each port of the first and second input lines of FIG. 11.

(a) of FIG. 18 shows gains and beam-steering angles according to signal application for each port of the first and second input lines of FIG. 11. (b) of FIG. 18 shows a beam pattern when signals are simultaneously applied to the first port P1 of the first input line 1210 and the sixth port P6 of the second input line 1310. (c) of FIG. 18 shows a beam pattern when signals are simultaneously applied to the third port P3 of the first input line 1210 and the eighth port P8 of the second input line 1310. (d) of FIG. 18 shows a beam pattern when signals are simultaneously applied to the fifth port P5 of the first input line 1210 and the tenth port P10 of the second input line 1310.

Referring to FIGS. 11 and 18, when signals are applied to the first and sixth ports P1 and P6 of the first and second input lines 1210 and 1310, a circular polarization beam having a gain of 17.0 dBi and a beam-steering angle of 25 degrees is formed. When signals are applied to the third and eighth ports P3 and P8 of the first and second input lines 1210 and 1310, a circular polarization beam having a gain of 19.1 dBi and a beam-steering angle of 0 degrees is formed. When signals are applied to the fifth and tenth ports P5 and P10 of the first and second input lines 1210 and 1310, a circular polarization beam having a gain of 16.3 dBi and a beam-steering angle of - 25 degrees is formed. Referring to FIGS. 4, 11, and 18, a circular polarization beam can be formed while maintaining a scan loss value of 3 dB or less within a beam coverage area of ±25 degrees.

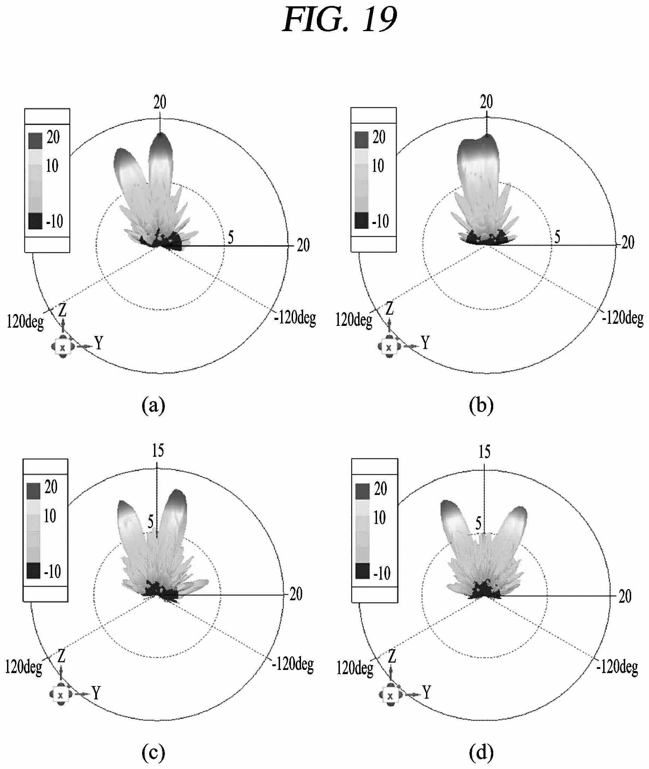

Meanwhile, in the signal transmission device according to the disclosure, by applying signals to a plurality of ports, two or more multi-beam patterns in different directions may be formed in addition to a circular polarization beam pattern. In this regard, FIG. 19 shows multi-beam patterns when a signal is applied to one port of the first input line and one port of the second input line.

Referring to FIGS. 4 and 11 and (a) of FIG. 19, a multi-beam pattern that is formed when signals are simultaneously applied to the third port P3 of the first input line 1210 and the sixth port P6 of the second input line 1310 is shown. A beam in a 0-degree direction is formed by the signal applied to the third port P3 of the first input line 1210, while a beam in a 25-degree direction is formed by the signal applied to the sixth port P6 of the second input line 1310. The peak gain of the beam radiated through the antenna unit 1100b of the two-dimensional array antenna is 16.8 dBi.

Referring to FIGS. 4 and 11 and (b) of FIG. 19, a multi-beam pattern that is formed when signals are simultaneously applied to the third port P3 of the first input line 1210 and the seventh port P7 of the second input line 1310 is shown. A beam in the 0-degree direction having vertical polarization is formed by the signal applied to the third port P3 of the first input line 1210, while a beam in a 12.5-degree direction having horizontal polarization is formed by the signal applied to the seventh port P7 of the second input line 1310. The peak gain of the beam radiated through the antenna unit 1100b of the two-dimensional array antenna is 16.15 dBi.

Referring to FIGS. 4 and 11 and (c) of FIG. 19, a multi-beam pattern that is formed when signals are simultaneously applied to the first port P1 of the first input line 1210 and the ninth port P9 of the second input line 1310 is shown. A beam in a 25-degree direction having vertical polarization is formed by the signal applied to the first port P1 of the first input line 1210, while a beam in a -12.5-degree direction having horizontal polarization is formed by the signal applied to the ninth port P9 of the second input line 1310. The peak gain of the beam radiated through the antenna unit 1100b of the two-dimensional array antenna is 15.59 dBi.

Referring to FIGS. 4 and 11 and (d) of FIG. 19, a multi-beam pattern formed when signals are simultaneously applied to the first port P1 of the first input line 1210 and the tenth port P10 of the second input line 1310 is shown. A beam in the 25-degree direction having vertical polarization is formed by the signal applied to the first port P1 of the first input line 1210, while a beam in a 25-degree direction having horizontal polarization is formed by the signal applied to the tenth port P10 of the second input line 1310. The peak gain of the beam radiated through the antenna unit 1100b of the two-dimensional array antenna is 14.97 dBi.

In this regard, when signals are applied to ports at corresponding positions in the first and second input lines 1210 and 1310, circular polarization beam patterns are formed. Meanwhile, when signals are applied to ports at different positions in the first and second input lines 1210 and 1310, a beam of the vertical polarization and a beam of the horizontal polarization are formed in different directions.

On the other hand, when two ports are selected from the first input line 1210, two beams having vertical polarization may be formed. In addition, when two ports are selected from the second input line 1310, two beams having horizontal polarization may be formed. However, when forming two beams having vertical polarization, two signals are applied to the same first Rotman lens 1230, so that mutual interference between signals occurs. In addition, when forming two beams of horizontal polarization, two signals are applied to the same second Rotman lens 1330, so that mutual interference between signals occurs. Beam pattern distortion, gain reduction, and side-lobe increase may occur due to the mutual interference between signals.

Accordingly, in order to reduce interference between two signals, multi-beams may be formed by selecting one port from the first input line 1210 and one port from the second input line 1310. Referring to FIGS. 4, 11, and 19, the operation of the signal transmission device 1000 implemented as a multi-beam antenna will be described. The modem 1400 of the signal transmission device 1000 may form a first beam of a first polarization that is steered toward a first angle by applying a first signal to any one of the first port P1 to the fifth port P5 of the first input line 1210. The modem 1400 may form a second beam of a second polarization that is steered toward a second angle by applying a second signal to any one of the sixth port P6 to the tenth port P10 of the second input line 1310 while forming the first beam of the first polarization. The second angle, which is a steering angle of the second beam of the second polarization, may be formed as an angle different from the first angle, which is a steering angle of the first beam of the first polarization.

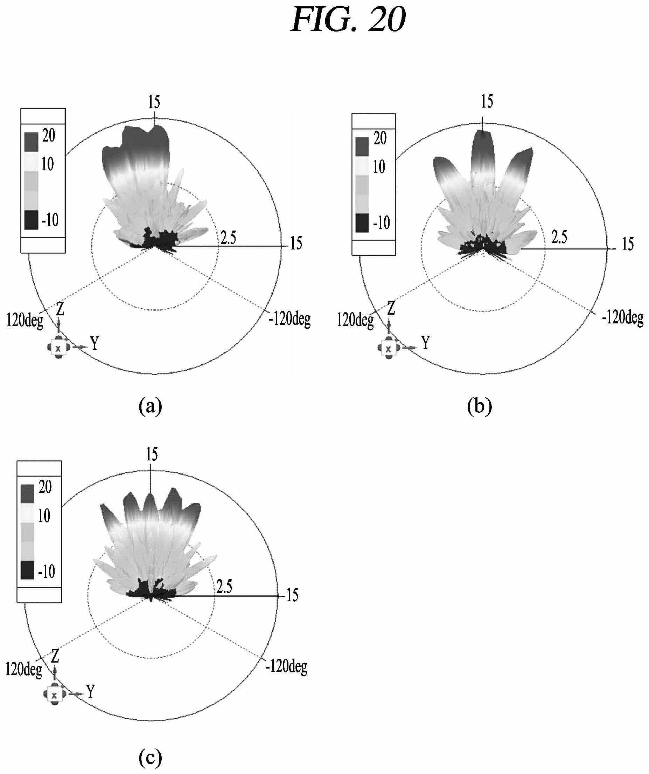

Meanwhile, multi-beams may be formed by selecting M ports for one of the first and second input lines 1210 and 1310 and selecting N ports for the other. In this regard, FIG. 20 shows beam patterns when M ports are selected for one of the first and second input lines and N ports are selected for the other.

Referring to FIGS. 4 and 11 and (a) of FIG. 20, a multi-beam pattern formed when signals are simultaneously applied to the first and third ports P1 and P3 of the first input line 1210 and the seventh port P7 of the second input line 1310 is shown. Beams in 25-degree and 0-degree directions having vertical polarization are formed by the signals applied to the first and third ports P1 and P3 of the first input line 1210, while a beam in a 12.5-degree direction having horizontal polarization is formed by the signal applied to the seventh port P7 of the second input line 1310. The peak gain of the beam radiated through the antenna unit 1100b of the two-dimensional array antenna is 14.21 dBi.

Referring to FIGS. 4 and 11 and (b) of FIG. 20, a multi-beam pattern formed when signals are simultaneously applied to the first and fifth ports P1 and P5 of the first input line 1210 and the eighth port P8 of the second input line 1310 is shown. Beams in 25-degree and -25-degree directions having vertical polarization are formed by the signals applied to the first and fifth ports P1 and P5 of the first input line 1210, while a beam in a 0-degree direction having horizontal polarization is formed by the signal applied to the eighth port P8 of the second input line 1310. The peak gain of the beam radiated through the antenna unit 1100b of the two-dimensional array antenna is 13.67 dBi.

Referring to FIGS. 4 and 11 and (c) of FIG. 20, a multi-beam pattern formed when signals are simultaneously applied to the first, third, and fifth ports P1, P3, and P5 of the first input line 1210 and the seventh and ninth ports P7 and P9 of the second input line 1310 is shown. Beams in 25-degree, 0-degree, and -25-degree directions having vertical polarization are formed by the signals applied to the first, third, and fifth ports P1, P3, and P5 of the first input line 1210, while beams in -12.5-degree and 12.5-degree directions having horizontal polarization are formed by the signals applied to the seventh and ninth ports P7 and P9 of the second input line 1310. The peak gain of the beam radiated through the antenna unit 1100b of the two-dimensional array antenna is 12.0 dBi.

Referring to FIGS. 4, 11, and 20, the operation of the signal transmission device 1000 implemented as a multi-beam antenna will be described. The modem 1400 of the signal transmission device 1000 may form first beams of a first polarization that are steered toward first angles by applying first signals to one or more ports among the first to fifth ports P1 to P5 of the first input line 1210. The modem 1400 may form second beams of a second polarization that are steered toward second angles by applying second signals to one or more ports among the sixth to tenth ports P6 to P10 of the second input line 1310 while forming the first beams of the first polarization. Second angles, which are steering angles of the second beams of the second polarization, may be formed as angles different from the first angles, which are steering angles of the first beams of the first polarization.

A signal transmission device including a one-dimensional or two-dimensional array antenna and a Rotman lens according to the disclosure has been described above. Technical effects of the signal transmission device including the one-dimensional or two-dimensional array antenna and the Rotman lens according to the disclosure are described as follows.

According to an embodiment, beam patterns of vertical/horizontal/circular polarization can be formed through a signal transmission device radiating multi-polarization signals.

According to an embodiment, a vertical/horizontal/circular polarization variable beam-switching solution can be proposed by implementing a Rotman lens-based signal generation network, which is capable of imparting two or more polarization characteristics to an array antenna.

According to an embodiment, a signal transmission device radiating variable multi-polarization signals of vertical/horizontal/circular polarization in a millimeter-wave or higher frequency band can be implemented.

According to an embodiment, an array antenna can be shared to independently/mutually supply signals to the array antenna by using a multi-Rotman lens-based multi-signal generation network capable of applying vertical or horizontal polarization signals. Accordingly, vertical/horizontal/circular polarization can be implemented by selectively applying signals according to polarization characteristics to be radiated.

According to an embodiment, selective beam-steering for vertical/horizontal/circular polarization can be allowed, and radiation performances such as beam-steering, beam-forming, and beam-broadening can be controlled.

According to an embodiment, multi-beam operation characteristics, which are difficult to be implemented with a beamformer such as a single Rotman lens or a Butler matrix, can be improved by improving antenna radiation performance in a multi-beam generation mode using multi-Rotman lenses.

According to an embodiment, beam-forming can be provided in one axial direction by changing ports of input lines connected to a Rotman lens in a signal transmission device radiating multi-polarization signals, enabling beam synthesis with two or more polarization characteristics.

According to an embodiment, mutual interference between multi-beams can be reduced by applying signals to ports in different regions while forming multi-beams in a signal transmission device radiating multi-polarization signals capable of beam synthesis with two or more polarization characteristics.

A further scope of applicability of the disclosure will become apparent from the detailed description below. However, since various changes and modifications within the spirit and scope of the disclosure can be clearly understood by those skilled in the art, it should be understood that specific embodiments such as the detailed description and preferred embodiments of the disclosure are given by way of example only. The detailed description should not be interpreted as limiting in all respects and should be considered as exemplary. The scope of the disclosure should be determined by a reasonable interpretation of the appended claims, and all changes within the equivalent scope of the disclosure are included in the scope of the disclosure.

## Claims

1. A signal transmission device comprising a plurality of Rotman lenses, the device comprising:
an antenna unit comprising a plurality of patch antennas;
a first signal line electrically connected to each of the plurality of patch antennas to cause the plurality of patch antennas to operate in a first polarization, the first signal line comprising a first input line connected to a modem, a first output line connected to the antenna unit, and a first Rotman lens positioned between the first input line and the first output line; and
a second signal line electrically connected to each of the plurality of patch antennas to cause the plurality of patch antennas to operate in a second polarization, the second signal line comprising a second input line connected to the modem, a second output line connected to the antenna unit, and a second Rotman lens positioned between the second input line and the second output line,
wherein a signal transmission length of the second signal line is formed to be larger than a signal transmission length of the first signal line by a quarter of a wavelength (λg).

2. The signal transmission device of claim 1, wherein
one side and another side of the first Rotman lens are connected to the first input line and the first output line,
one side and another side of the second Rotman lens are connected to the second output line and the second input line, and
the second Rotman lens is formed in a symmetrical structure with the first Rotman lens with respect to a vertical axis of a substrate.

3. The signal transmission device of claim 1, wherein
the first input line comprises first to fifth ports connected to one side of the first Rotman lens,
the second input line comprises sixth to tenth ports connected to another side of the second Rotman lens, and
the modem is configured to control a signal of the first polarization to be beam-formed by changing a port, to which a signal is input, to any one of the first to fifth ports, and to control a signal of the second polarization to be beam-formed by changing the port, to which a signal is input, to any one of the sixth to tenth ports.

4. The signal transmission device of claim 3, wherein the modem is configured to,
control a beam of the first polarization or the second polarization to be steered by 2α by applying the signal to the first port or the sixth port,
control the beam of the first polarization or the second polarization to be steered by α by applying the signal to the second port or the seventh port,
control the beam of the first polarization or the second polarization to be steered to 0 degrees by applying the signal to the third port or the eighth port,
control the beam of the first polarization or the second polarization to be steered by -α by applying the signal to the fourth port or the ninth port, and
control the beam of the first polarization or the second polarization to be steered by -2α by applying the signal to the fifth port or the tenth port.

5. The signal transmission device of claim 3, wherein the modem is configured to,
control ports, to which the signals are input, so that any one pair of first to fifth pairs of the first port and the sixth port to the fifth port and the tenth port is selected, and
control a circular polarization signal to be beam-formed by changing the selected pair of ports.

6. The signal transmission device of claim 5, wherein the modem is configured to,
control the circular polarization beam to be steered by 2α by applying a first signal to the first port and a second signal to the sixth port,
control the circular polarization beam to be steered by α by applying the first signal to the second port and the second signal to the seventh port,
control the circular polarization beam to be steered to 0 degrees by applying the first signal to the third port and the second signal to the eighth port,
control the circular polarization beam to be steered by -α by applying the first signal to the fourth port and the second signal to the ninth port, and
control the circular polarization beam to be steered by -2α by applying the first signal to the fifth port and the second signal to the ninth port.

7. The signal transmission device of claim 5, further comprising:
first dummy ports connected to lines in an upper region of the first Rotman lens;
second dummy ports connected to lines in a lower region of the first Rotman lens;
third dummy ports connected to lines in an upper region of the second Rotman lens; and
fourth dummy ports connected to lines in a lower region of the second Rotman lens.

8. The signal transmission device of claim 7, wherein
the first dummy ports and the second dummy ports are each fewer in number than the ports of the first input line,
the third dummy ports and the fourth dummy ports are each fewer in number than the ports of the first input line,
a sum of the number of the first dummy ports and the number of the second dummy ports is greater than the number of the ports of the first input line, and
a sum of the number of the third dummy ports and the number of the fourth dummy ports is greater than the number of the ports of the first input line.

9. The signal transmission device of claim 5, wherein
the plurality of patch antennas comprise first to eighth patch antennas,
the first output line comprises first to eighth ports configured to apply signals of a first polarization to the first to eighth patch antennas, and
the second output line comprises ninth to sixteenth ports configured to apply signals of a second polarization to the first to eighth patch antennas.

10. The signal transmission device of claim 9, wherein
each of the first to eighth patch antennas is formed as a rectangular patch antenna rotated by 45 degrees with respect to a first axis,
an end of the first output line is coupled to the first to eighth patch antennas at an angle of -45 degrees with respect to the first axis, and
an end of the second output line is coupled to the first to eighth patch antennas at an angle of 45 degrees with respect to the first axis.

11. The signal transmission device of claim 9, wherein
outermost upper and lower lines among the first output lines are formed in a linear structure and remaining lines are formed in a curved structure, and
outermost upper and lower lines among the second output lines are formed in a linear structure and remaining lines are formed in a curved structure.

12. The signal transmission device of claim 10, wherein the modem is configured to,
allow first to eighth signals to be applied to the first to eighth ports in a third axial direction of the first to eighth patch antennas, such that the first polarization is formed in the first to eighth patch antennas,
allow ninth to sixteenth signals to be applied to the ninth to sixteenth ports in a fourth axial direction perpendicular to the third axis of the first to eighth patch antennas, such that the second polarization is formed in the first to eighth patch antennas, and
allow circular polarization to be formed in the first to eighth patch antennas by applying the first to eighth signals to the first to eighth ports and applying the ninth to sixteenth signals to the ninth to sixteenth ports, and
the third axial direction is a direction of an axis rotated by 45 degrees with respect to the first axis, and the fourth axial direction is a direction of an axis rotated by 45 degrees with respect to the second axis.

13. The signal transmission device of claim 4, wherein the modem is configured to,
form a first beam of the first polarization that is steered toward a first angle by applying a first signal to any one port among the first to fifth ports, and
form a second beam of the second polarization that is steered toward a second angle different from the first angle by applying a second signal to any one port among the sixth to tenth ports while forming the first beam.

14. The signal transmission device of claim 13, wherein the modem is configured to,
form the first beams of the first polarization to be steered toward first angles by applying first signals to one or more ports among the first to fifth ports, and
form the second beams of the second polarization to be steered toward second angles, different from the first angles, by applying second signals to one or more ports among the sixth to tenth ports while forming the first beams.

15. The signal transmission device of claim 4, wherein
the first output line comprises first to eighth ports connected to the other side of the first Rotman lens,
the second output line comprises ninth to sixteenth ports connected to the one side of the second Rotman lens,
the plurality of patch antennas comprise first to eighth patch antennas arranged in a two-dimensional structure, and
each of the first to eighth patch antennas comprises a plurality of patch antenna elements spaced apart from each other in a first axial direction.

16. The signal transmission device of claim 15, wherein adjacent patch antenna elements in the first axial direction of each of the first to eighth patch antennas are spaced apart by a length corresponding to a wavelength associated to an operating frequency of the antenna unit.

17. The signal transmission device of claim 16, further comprising:
a first feed line extending from the first output line to a rightmost patch antenna element; and
a second feed line extending from the second output line to a leftmost patch antenna element.

18. The signal transmission device of claim 17, wherein the modem is configured to,
control the antenna unit to radiate the signal of the first polarization by applying a first signal to the first feed line,
control the antenna unit to radiate the signal of the second polarization by applying a second signal to the second feed line, and
control the antenna unit to radiate the circular polarization signal by applying the first signal to the first feed line and the second signal to the second feed line.
